# DEMANDE DE BREVET EUROPEEN

(11) **EP 1 081 418 A1**
(43) Date de publication de la demande: **07.03.2001**
(21) Numéro de dépôt: 00402448.5
(22) Date de dépôt: 04.09.2000
(51) Int. Cl.: F16H 61/36, F16H 61/26, F16C 1/26

(54) **Pièce monobloc de support et d'articulation pour une commande de vitesses à câbles**

(30) Priorité: 06.09.1999 FR 9911200
(71) Demandeur: United Parts France SA, 74300 Cluses (FR)
(72) Inventeur: Rapin, Georges, 74300 Cluses (FR)
(74) Mandataire: Ramey, Daniel

(57) **Abrégé**

Pièce monobloc de support et d'articulation pour une commande de vitesses à câbles, réalisée d'une pièce par moulage en une matière plastique rigide ayant une haute tenue thermique et comprenant une base (12) rigidifiée par deux séries de nervures (14) raccordées à angle droit les unes aux autres, la base (12) formant une liaison entre des moyens (16, 18) de fixation des bagues d'arrêt de gaine et un support d'un mécanisme de renvoi (32).

L'invention s'applique notamment aux commandes de vitesses à câbles pour véhicule automobile.

## Description

L'invention concerne une pièce monobloc de support et d'articulation pour une commande de vitesses à câbles, en particulier pour véhicule automobile, comprenant des moyens de fixation sur un élément fixe tel qu'un carter de boîte de vitesses, des oreilles de fixation de moyens de commande et des moyens de guidage d'un organe de transmission de mouvement.

Une telle pièce est logée dans le compartiment moteur du véhicule et doit satisfaire à un certain nombre de critères parmi lesquels :
- la résistance mécanique,
- la rigidité,
- un premier mode de résonance supérieur à 300 Hz,
- la tenue thermique,
- la résistance à l'environnement moteur (hydrocarbures, acides, graisses),
- l'anti-corrosion.

Dans la technique actuelle, ces pièces sont réalisées par mécano-soudure ou sont en aluminium moulé et leur fabrication est relativement longue et coûteuse.

La présente invention a notamment pour but d'éviter ces inconvénients.

Elle propose à cet effet une pièce du type précité, caractérisée en ce qu'elle est réalisée d'une pièce par moulage en une matière plastique rigide ayant une haute tenue thermique et comprend une structure nervurée en treillis qui relie les oreilles de fixation précitées aux moyens de guidage de l'organe de transmission.

Les pièces selon l'invention sont plus légères et moins coûteuses que celles de la technique antérieure, elles présentent sensiblement les mêmes caractéristiques mécaniques et leur fabrication est plus simple et ne nécessite pas d'usinage de reprise.

Dans un mode de réalisation préféré de l'invention, la matière plastique est un polyphtalamide chargé de fibres de verre et de matières minérales et contient environ 65% de charges.

Dans une variante de l'invention, la matière plastique est un polyamide 6.6 chargé de fibres de verre.

Dans un premier mode de réalisation, la pièce selon l'invention forme une platine d'arrêt de gaine dont les oreilles servent à la fixation des bagues d'arrêt des gaines contenant les câbles de commande des vitesses, dont l'un est relié à un mécanisme de renvoi monté sur ladite platine.

Avantageusement, la matière plastique de la platine est surmoulée sur l'extrémité d'un axe du mécanisme de renvoi, cet axe se trouvant ainsi solidaire, de moulage, de la platine, ce qui permet de supprimer les moyens de fixation utilisés à cet effet dans la technique antérieure.

Dans un autre mode de réalisation, la pièce selon l'invention comporte un palier de guidage d'une tige mobile en translation et en rotation pour la sélection et le passage des vitesses, qui est reliée à un levier basculant monté à rotation sur un axe porté par les oreilles de fixation précitées. Cette tige est également reliée par un mécanisme de renvoi supporté par la pièce selon l'invention à un câble de déplacement en rotation.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

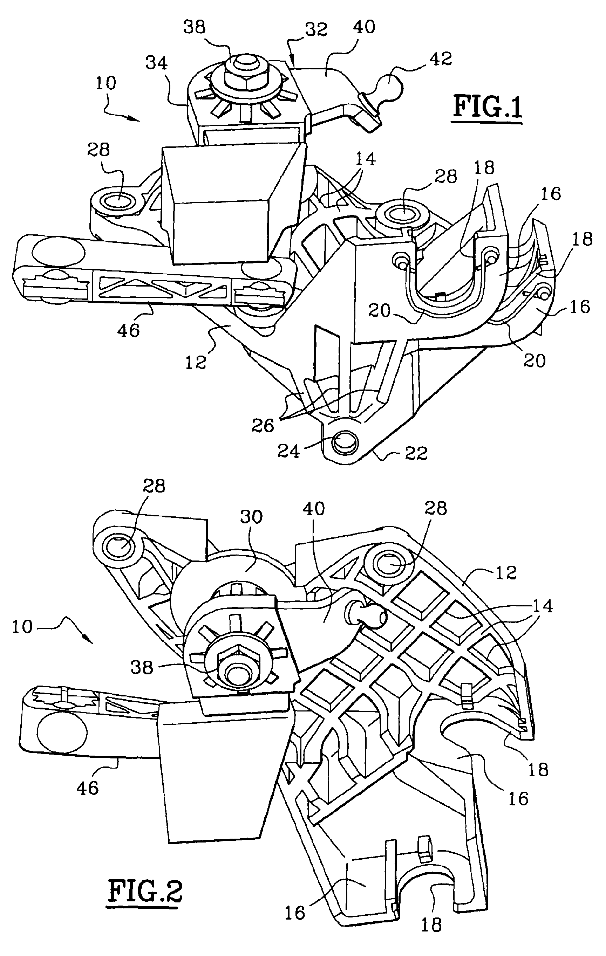

- les figures 1 et 2 sont des vues schématiques en perspective d'une platine d'arrêt de gaine selon l'invention ;

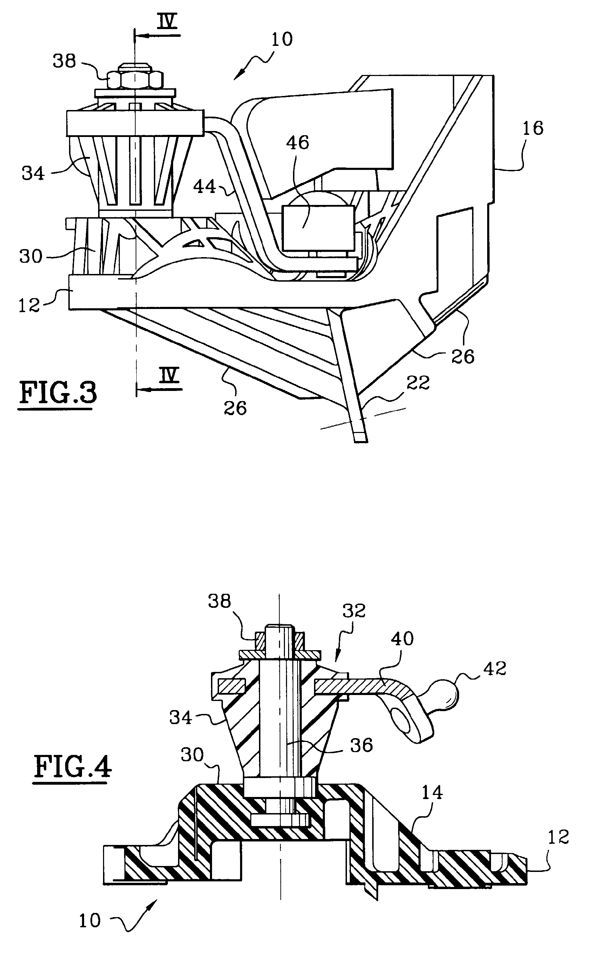

- la figure 3 est une vue de côté de cette platine ;
- la figure 4 est une vue en coupe selon la ligne IV-IV de la figure 3.

La platine 10 d'arrêt de gaine représentée aux dessins comprend une base 12 dont une face est destinée à être appliquée sur un carter d'une boîte de vitesses et dont l'autre face est formée avec un réseau de nervures 14 qui sont sensiblement rectilignes et perpendiculaires entre elles et qui sont raccordées les unes aux autres sensiblement à angle droit, de façon à constituer une structure de rigidification en treillis.

La platine 10 comprend, sur un côté de la base 12, deux oreilles 16 sensiblement parallèles et adjacentes, perpendiculaires à la base 12 et présentant des échancrures en U 18 conformées pour recevoir des bagues d'arrêt de gaine qui sont fixées, par exemple par sertissage, sur les gaines des câbles coulissants utilisés pour la sélection et le passage des vitesses.

Des agrafes-ressorts 20 en fil métallique sont fixés sur les faces extérieures des oreilles 16 et constituent des organes de verrouillage des bagues d'arrêt de gaine qui sont montées dans les échancrures 18.

Un rebord 22, formé sur la face opposée de la base 12, comprend un orifice 24 de passage d'un organe de fixation et est relié par des nervures de rigidification 26 aux oreilles 16 précitées et à la base 12.

Deux autres orifices 28 de passage d'organes de fixation sur le support sont formés dans la base 12.

Ces organes de fixation s'appliquent sur les bords d'extrémité des orifices 24, 28 de la structure nervurée, qui supporte donc les efforts ou contraintes de fixation.

La base 12 comprend également, sur sa face portant les oreilles 16 précitées, une partie surélevée 30 formant socle d'un mécanisme de renvoi 32 qui est associé à l'un des câbles de commande de vitesses et qui comprend un moyeu 34 monté tournant sur un axe 36 dont une extrémité est solidaire, par surmoulage, de la partie 30 de la base 12 et dont l'autre extrémité est filetée et reçoit un écrou de fixation 38. Le moyeu 34 est solidaire, par surmoulage, d'un bras 40 se terminant par une rotule 42 de liaison à un câble de commande de vitesses, et d'un autre bras 44 portant une biellette de renvoi 46 et une masse d'inertie.

Dans un mode de réalisation préféré de l'invention, la platine 10 est réalisée, par moulage par injection, en un polyphtalamide renforcé par une charge minérale et par des fibres de verre, la quantité de charges dans la matière plastique étant par exemple de 65% en poids.

Cette matière a une haute tenue en température (sa température de fléchissement sous charge à 1,8 MPa est supérieure à 270°C) et une rigidité élevée (son module d'élasticité en flexion et en traction est supérieur à 18000 MPa). Elle est commercialisée notamment sous la marque AMODEL.

En variante, la platine peut être réalisée en un polyamide 6.6 renforcé par des fibres de verre.

Le moyeu 34 du mécanisme de renvoi est réalisé en une matière plastique telle que du polyamide 6.6 renforcé par des fibres de verre.

La base 12, qui relie des zones de la platine soumises à des efforts différents (oreilles 16, points de fixation 24, 28, support 30 du mécanisme de renvoi) supporte ces efforts grâce à la combinaison de sa structure nervurée en treillis et de sa matière constitutive qui est mécaniquement et thermiquement résistante.

La platine d'arrêt de gaine qui vient d'être décrite, répond au cahier des charges établi pour les platines en aluminium ou réalisées par mécano-soudure. Elle permet, entre autres, une adaptation à une commande à câbles d'une boîte de vitesses prévue pour une commande à barres et elle est beaucoup plus simple et moins coûteuse à fabriquer que les platines de la technique antérieure.

L'invention est également applicable à d'autres pièces monoblocs de support et de fixation des moyens de commande de vitesses à câbles, et notamment à des pièces fixées sur les carters de boîtes de vitesses et comportant des paliers dans lesquels sont guidées des tiges de sélection et de passage des vitesses. Ces tiges sont reliées aux câbles de commande, d'une part au moyen de leviers basculants montés à rotation sur des axes portés par des oreilles des pièces selon l'invention et, d'autre part, par des mécanismes de renvoi supportés par les pièces selon l'invention. De préférence, ces mécanismes sont reliés aux tiges précitées par des moyens permettant une translation axiale des tiges, pour que les moyens de commande de sélection des vitesses soient mécaniquement découplés des moyens de commande de passage des vitesses, qui ont une inertie plus grande.

Comme dans le mode de réalisation précédent, ces pièces comprennent une base nervurée en treillis, comportant des points de fixation sur le carter, des oreilles de fixation de moyens de commande et des moyens de guidage d'un organe de transmission de mouvement, et c'est la combinaison de leur structure nervurée en treillis et de leur matière constitutive mécaniquement et thermiquement résistante qui leur permet de supporter les différents efforts auxquels elles sont soumises.

## Revendications

1. Pièce monobloc de support et d'articulation pour une commande de vitesses à câbles, en particulier pour véhicule automobile, comprenant des moyens de fixation sur un élément fixe tel qu'un carter de boîte de vitesses, des oreilles de fixation de moyens de commande et des moyens de guidage d'un organe (32) de transmission de mouvement, caractérisée en ce qu'elle est réalisée d'une pièce par moulage en une matière plastique rigide ayant une haute tenue thermique et comprend une structure (14) nervurée en treillis qui relie les oreilles (16, 18) de fixation des moyens de commande aux moyens (30, 36) de guidage de l'organe de transmission (32).

2. Pièce selon la revendication 1, caractérisée en ce que des orifices (28) sont formés dans ladite structure nervurée pour le passage et le support d'organes de fixation sur l'élément fixe.

3. Pièce selon la revendication 1 ou 2, caractérisée en ce que ladite structure nervurée est formée sur une base (12) de la pièce dont une face comporte deux séries de nervures (14) rectilignes raccordées à angle droit les unes aux autres.

4. Pièce selon l'une des revendications précédentes, caractérisée en ce que ladite matière plastique est un polyphtalamide chargé de fibres de verre et de matières minérales.

5. Pièce selon la revendication 4, caractérisée en ce qu'elle comprend environ 65% de charges en poids.

6. Pièce selon l'une des revendications 1 à 3, caractérisée en ce que ladite matière plastique est un polyamide 6.6 chargé de fibres de verre.

7. Pièce selon l'une des revendications précédentes, caractérisée en ce que ladite matière plastique est surmoulée sur l'extrémité d'un axe (36) de guidage en rotation d'un mécanisme de renvoi (32).

8. Pièce selon l'une des revendications 1 à 6, caractérisée en ce que lesdites oreilles (16, 18) sont conformées pour la fixation de bagues d'arrêt des gaines des câbles de commande.

9. Pièce selon l'une des revendications 1 à 6, caractérisée en ce que sa structure nervurée comprend un palier de guidage d'une tige mobile en rotation et en translation pour la sélection et la passage des vitesses, qui est reliée à un levier basculant monté à rotation sur un axe porté par les oreilles (16, 18) précitées.
